(19) Europäisches Patentamt
European Patent Office
Office européen des brevets

(11) **EP 1 777 399 A2**

(12) **EUROPÄISCHE PATENTANMELDUNG**

(43) Veröffentlichungstag:
**25.04.2007 Patentblatt 2007/17**

(51) Int Cl.:
*F02D 41/22* (2006.01)    *F02D 41/14* (2006.01)
*F02D 41/24* (2006.01)    *F02D 41/04* (2006.01)

(21) Anmeldenummer: 06120590.2

(22) Anmeldetag: **13.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **18.10.2005  DE 102005049870**

(71) Anmelder: **SIEMENS AKTIENGESELLSCHAFT**
**80333 München (DE)**

(72) Erfinder: **Reichl, Christian**
**81825, München (DE)**

(54) **Verfahren und Vorrichtung zur Erkennung eines fehlerhaften Anschlusses eines Differenzdrucksensors**

(57)    Bei einem Verfahren zur Erkennung eines fehlerhaften Anschlusses eines Differenzdrucksensors (4) mit einem Hoch- und einem Niederdruckanschluss (5, 6) an einen Abgastrakt (2) einer Brennkraftmaschine (1) parallel zu einem Partikelfilter (3) in dem Abgastrakt (2), wird während des Betriebs der Brennkraftmaschine (1) geprüft, ob gemäß wenigstens einem vorgegebenen Kriterium stabile Betriebsbedingungen herrschen. Wenigstens bei Vorliegen stabiler Betriebsbedingungen wird aus Sensorsignalen des Differenzdrucksensors (4) wenigstens ein für die stabilen Betriebsbedingungen repräsentativer unkorrigierter Differenzdruckwert ermittelt. Bei einer ersten Erkennung während des Betriebs der Brennkraftmaschine (1) wird geprüft, ob der für die stabilen Betriebsbedingungen repräsentative unkorrigierte Differenzdruck ein erstes vorgegebenes Fehlerkriterium für einen falschen Anschluss erfüllt, und/oder einer zweiten Erkennung nach Ende des Betriebs der Brennkraftmaschine (1) wird ein Wert eines Offsetparameters einer Kennlinie des Differenzdrucksensors ermittelt, in Abhängigkeit von dem ermittelten Offsetparameterwert und dem für die stabilen Betriebsbedingungen repräsentativen unkorrigierten Differenzdruckwert ein korrigierter minimaler Differenzdruckwert ermittelt und geprüft, ob der korrigierte minimale Differenzdruckwert ein zweites vorgegebenes Fehlerkriterium für einen falschen Anschluss erfüllt.

FIG 1

**Beschreibung**

Die vorliegende Erfindung bezieht sich auf ein Verfahren zur Erkennung eines fehlerhaften Anschlusses eines Differenzdrucksensors mit einem Hoch- und einem Niederdruckanschluss an einem Abgastrakt einer Brennkraftmaschine parallel zu einem Partikelfilter und Mittel zur Durchführung des Verfahrens.

Zur Reinigung von Abgasen von Brennkraftmaschinen, insbesondere Dieselmotoren, von Partikeln können in einem Abgastrakt der Brennkraftmaschine angeordnete Partikelfilter eingesetzt werden, durch die das Abgas geführt wird. Ein solcher Partikelfilter filtert die Partikel aus dem Abgasstrom heraus, wobei die Partikel in dem Partikelfilter verbleiben. Um eine Funktion des Partikelfilters auf Dauer zu gewährleisten, muss dieser ab einer gewissen Beladung entladen werden. Dazu muss der Beladungszustand des Partikelfilters überprüft werden.

Hierzu bietet es sich an, den Effekt zu nutzen, dass die Druckdifferenz zwischen dem Abgaseinlass und dem Abgasauslass des Partikelfilters, im Folgenden auch als Differenzdruck bezeichnet, von der Beladung mit Partikeln abhängt. Zur Messung der Druckdifferenz werden Differenzdrucksensoren eingesetzt, die parallel zu dem Partikelfilter in den Abgastrakt geschaltet sind und so den Druckabfall des Abgasstroms über den Partikelfilter, d.h. die Differenz zwischen dem Druck unmittelbar stromaufwärts des Partikelfilters und dem Druck unmittelbar stromabwärts des Partikelfilters, erfassen können. Unter den Angaben "unmittelbar stromaufwärts" bzw. "unmittelbar stromabwärts" wird dabei und im Folgenden verstanden, dass zwischen dem so bezeichneten Bereich in dem Abgastrakt unmittelbar stromauf- bzw. stromabwärts des Partikelfilters und dem Abgasein- bzw. -auslass des Partikelfilters keine Abschnitte des Abgastrakts liegen, die einen dem Druckabfall an dem Partikelfilter vergleichbaren Druckabfall hervorrufen, so dass der Differenzdrucksensor tatsächlich im Wesentlichen den durch den Partikelfilter erzeugten Differenzdruck erfasst.

Die Differenzdrucksensoren weisen dazu zwei Gasanschlüsse auf, die im Folgenden auch als Hoch- und Niederdruckanschluss bezeichnet werden. Der Hochdruckanschluss ist dadurch festgelegt, dass der Sensor ein Sensorsignal, das einen positiven Differenzdruck wiedergibt, abgibt, wenn an dem Hochdruckanschluss ein höherer Druck anliegt als an dem Niederdruckanschluss. Die Bezeichnung Hochdruckanschluss bzw. Niederdruckanschluss impliziert jedoch in keiner Weise, dass an diesen Anschluss ein Hochdruck, d.h. ein quantitativ hoher Druck, bzw. Niederdruck, d.h. ein quantitativ niedriger angelegt wird.

Die eingesetzten Differenzdrucksensoren zeigen jedoch Eigenheiten, die es erfordern, dass der Hochdruckanschluss des Differenzdrucksensors mit dem Abgastrakt stromaufwärts des Partikelfilters und der Niederdruckanschluss des Differenzdrucksensors mit dem Abgastrakt stromabwärts des Partikelfilters verbunden werden muss.

So verfügen die eingesetzten Differenzdrucksensoren zwar über eine lineare Kennlinie, d.h. einen linearen Zusammenhang zwischen der Spannung des Sensorsignals und der zwischen dem Hoch- und dem Niederdruckanschluss anliegenden Druckdifferenz, jedoch driftet der Offset, d.h. die Spannung des Sensorsignals verändert sich bei einem Differenzdruck von 0 bar im Lauf der Zeit. Darüber hinaus ist der Messbereich für negative Differenzdrücke, in dem eine zuverlässige Messung möglich ist, nur sehr beschränkt.

Wird der Differenzdrucksensor daher bei seinem Einbau, beispielsweise bei der Fertigung oder bei einer Reparatur, mit vertauschten Hoch- und Niederdruckanschlüssen an den Abgastrakt angeschlossen, werden falsche Werte des erfassten Differenzdrucks geliefert. Eine zuverlässige Erkennung des Beladungszustands des Partikelfilters wäre dann nicht möglich, so dass beispielsweise eine notwendige Regeneration nicht sicher erkannt würde und der Partikelfilter das Abgas dann nicht mehr hinreichend reinigen könnte.

Es wäre nun denkbar, vor Inbetriebnahme der Brennkraftmaschine, wenn keine Druckdifferenz zwischen dem Hoch- und dem Niederdruckanschluss vorliegt, den Offset des Differenzdrucksensors durch Erfassung des Differenzdrucks zu ermitteln. Auf der Basis von Differenzdrücken, die mit dem bestimmten Offset ermittelt wurden, könnte dann festgestellt werden, ob eine Vertauschung der Anschlüsse vorliegt oder nicht.

Eine hinreichend genaue Bestimmung des Offsets vor der Inbetriebnahme der Brennkraftmaschine erscheint jedoch schwierig. Zur Ermittlung des Offsets verbleibt nur die Zeit zwischen Einschalten der Zündung und Anlassen des Motors. Dieser Zeitraum kann jedoch zu kurz zur Ermittlung des Offsets sein, beispielsweise wenn der Fahrer den Zündschlüssel durch die Stellung, in der die Zündung eingeschaltet wird, hindurch in die Anlassstellung durchdreht. Darüber hinaus kann der Anlasser das Bordnetz so belasten, dass der Differenzdrucksensor und eine Auswerteeinrichtung für dessen Signale nicht ausreichend mit Strom versorgt werden. Weiter können, beispielsweise bei sehr kalten Umgebungsbedingungen, der Partikelfilter und der Differenzdrucksensor in einem Zustand sein, der untypisch für den Betrieb und daher nicht verwendbar ist. Eine Adaption des Offsets vor Inbetriebnahme der Brennkraftmaschine und damit eine darauf aufbauende Erkennung einer Anschlussvertauschung erscheinen daher wenig geeignet.

Aus diesem Grund wäre es wünschenswert, einen falschen Anschluss des Differenzdrucksensors, d.h. eine Verbindung des Niederdruckanschlusses mit dem Abgastrakt unmittelbar stromaufwärts des Partikelfilters und eine Verbindung des Hochdruckanschlusses mit dem Abgastrakt unmittelbar stromabwärts des Partikelfilters, einfach erkennen bzw. diagnostizieren zu können.

Der vorliegenden Erfindung liegt daher die Aufgabe zugrunde, ein Verfahren zur Erkennung eines fehlerhaften Anschlusses eines Differenzdrucksensors mit einem Hoch- und einem Niederdruckanschluss an einem Abgastrakt einer Brennkraftmaschine parallel zu einem Partikelfilter sowie Mittel zur Durchführung des Verfahrens bereitzustellen.

Die Aufgabe wird gelöst durch ein Verfahren zur Erkennung eines fehlerhaften Anschlusses eines Differenzdrucksensors mit einem Hoch- und einem Niederdruckanschluss an einem Abgastrakt einer Brennkraftmaschine parallel zu einem Partikelfilter im Abgastrakt, bei dem während des Betriebs der Brennkraftmaschine geprüft wird, ob gemäß wenigstens einem vorgegebenen Kriterium stabile Betriebsbedingungen in dem Abgastrakt herrschen, und wenigstens bei Vorliegen stabiler Betriebsbedingungen aus Sensorsignalen des Differenzdrucksensors wenigstens ein für die stabilen Betriebsbedingungen repräsentativer unkorrigierter Differenzdruckwert ermittelt wird, und bei dem bei einer ersten Erkennung während des Betriebs der Brennkraftmaschine geprüft wird, ob der für die stabilen Betriebsbedingungen repräsentative unkorrigierte Differenzdruckwert ein erstes vorgegebenes Fehlerkriterium für einen falschen Anschluss erfüllt, und/oder bei dem bei einer zweiten Erkennung nach Ende des Betriebs der Brennkraftmaschine ein Wert eines Offsetparameters einer Kennlinie des Differenzdrucksensors ermittelt, in Abhängigkeit von dem ermittelten Offsetparameterwert und dem für die stabilen Betriebsbedingungen repräsentativen unkorrigierten Differenzdruckwert ein korrigierter minimaler Differenzdruckwert ermittelt und geprüft wird, ob der korrigierte minimale Differenzdruckwert ein zweites vorgegebenes Fehlerkriterium für einen falschen Anschluss erfüllt.

Die Aufgabe wird ebenfalls gelöst durch eine Vorrichtung zur Erkennung eines fehlerhaften Anschlusses eines Differenzdrucksensors mit einem Hoch- und einem Niederdruckanschluss an einen Abgastrakt einer Brennkraftmaschine parallel zu einem Partikelfilter, umfassend eine Sensorschnittstelle zur Erfassung von Sensorsignalen des Differenzdrucksensors, die unkorrigierte Werte des an dem Differenzdrucksensor anliegenden Differenzdrucks darstellen, und eine mit der Sensorschnittstelle verbundene Erkennungseinrichtung, die die Sensorsignale empfängt und auf der Basis der Sensorsignale das erfindungsgemäße Verfahren ausführt. Insbesondere prüft sie während des Betriebs der Brennkraftmaschine, ob gemäß wenigstens einem vorgegebenen Kriterium stabile Betriebsbedingungen in dem Abgastrakt herrschen, und ermittelt wenigstens bei Vorliegen stabiler Betriebsbedingungen wenigstens einen für die stabilen Betriebsbedingungen repräsentativen unkorrigierten Differenzdruckwert. Bei einer ersten Erkennung während des Betriebs der Brennkraftmaschine prüft sie, ob der für die stabilen Betriebsbedingungen repräsentative unkorrigierte Differenzdruck ein erstes vorgegebenes Fehlerkriterium für einen falschen Anschluss erfüllt, und/oder bei einer zweiten Erkennung nach Ende des Betriebs der Brennkraftmaschine ein Wert eines Offsetparameters einer Kennlinie des Differenzdrucksensors ermittelt, in Abhängigkeit von dem ermittelten Offsetparameterwert und dem für die stabilen Betriebsbedingungen repräsentativen unkorrigierten Differenzdruckwert ein korrigierter minimaler Differenzdruckwert ermittelt und prüft, ob der korrigierte minimale Differenzdruckwert ein zweites vorgegebenes Fehlerkriterium für einen falschen Anschluss erfüllt.

Die Erfindung kann für beliebige Brennkraftmaschinen und Partikelfilter eingesetzt werden, vorzugsweise für Dieselmotoren mit wenigstens einem im Abgastrakt des jeweiligen Dieselmotors angeordneten Partikelfilter.

Das Verfahren und die Vorrichtung können weiter mit beliebigen Differenzdrucksensoren verwendet werden, unter denen im Rahmen der vorliegenden Erfindung jegliche Sensoren verstanden werden, die eine Druckdifferenz zwischen einem Hoch- und einem Niederdruckanschluss des Sensors erfassen und ein die Druckdifferenz bzw. den Differenzdruck wiedergebendes Sensorsignal abgeben. Der Differenzdrucksensor verfügt dabei über eine, vorzugsweise lineare Kennlinie, die einen Offset, d.h. einen in der Regel nicht verschwindenden Wert des Sensorsignals bei einem Differenzdruck von 0 bar aufweist, der durch den Offsetparameter wiedergegeben wird. Dabei ergibt sich ein positiver Wert der erfassten Druckdifferenz gemäß der Kennlinie des Sensors nur, wenn der an dem Sensor, d.h. zwischen dem Hoch- und dem Niederdruckanschluss anliegende Differenzdruck positiv ist, d.h. der Druck an dem Hochdruckanschluss größer ist als an dem Niederdruckanschluss. Wie bereits eingangs erwähnt, implizieren die Begriffe Hoch- und Niederdruckanschluss nicht, dass an ihnen ein quantitativ hoher oder niedriger Druck anliegen muss.

Unter dem Differenzdruck wird dabei insbesondere auch jede Größe oder jedes Signal verstanden, die bzw. das den Differenzdruck eindeutig wiedergibt. Der unkorrigierte Differenzdruckwert ist dabei insbesondere der Rohdifferenzdruckwert oder der Differenzdruckwert, der sich aus Anwendung der Kennlinie mit einem vorgegebenen, noch nicht aktualisierten und damit nicht unbedingt aktuell zutreffenden Offsetparameterwert, aus dem Sensorsignal ergibt oder das unkorrigierte Sensorsignal selbst. Der korrigierte Differenzdruck ist dagegen ein Differenzdruck, der bezüglich des aktuellen Offsets korrigiert ist.

Die Steuereinrichtung verfügt zur Erfassung der Sensorsignale über die Sensorschnittstelle, die im einfachsten Fall ein Sensorsignaleingang sein kann. Häufig kann die Steuereinrichtung neben dem Sensorsignaleingang noch weitere Bauelemente und/oder eine Softwareschnittstelle umfassen.

Die Erfindung erkennt vertauschte Hoch- und Niederdruckanschlüsse am Abgastrakt, wobei der driftende Offsetparameterwert und die ungenaue Messung bei negativen Differenzdrücken vermieden wird.

Die Differenzdruckwerte werden unter stabilen Betriebsbedingungen im Abgastrakt bzw. bei stabilen Betriebszuständen der Brennkraftmaschine erfasst. Unter stabilen Betriebsbedingungen werden insbesondere solche Betriebsbedingungen verstanden, bei denen zwischen Abgaseinlass und Abgasauslass des Partikelfilters ein im Wesentlichen konstanter Differenzdruck vorliegt. Darüber hinaus ist vorzugsweise bei stabilen Betriebsbedingungen ein von Null verschiedener Differenzdruck vorhanden, d.h. die Brennkraftmaschine hat eine gegebenenfalls geringe aber nicht verschwindende Last. Zur Erkennung solcher Betriebsbedingungen bzw. Zustände dient das vorgegebene Kriterium, das insbesondere das Ausmaß zeitlicher Schwankungen von Parametern betreffen kann. Die Verwendung solcher Differenzdruckwerte hat den Vorteil, dass durch Änderungen des Betriebszustandes der Brennkraftmaschine verursachte Änderungen des an dem Sensor bzw. zwischen dem Hoch- und dem Niederdruckanschluss anliegenden Differenzdrucks, beispielsweise beim Beschleunigen, nicht oder nicht wesentlich in die Erkennung einer Vertauschung eingehen. Darüber hinaus kann davon ausgegangen werden, dass bei stabilen Betriebsbedingungen bzw. Betriebszuständen die Differenzdruckwerte nur wenig, d.h. in einem durch das vorgegebene Kriterium ermöglichten Rahmen, schwanken.

Während des Betriebs werden nur unkorrigierte Differenzdruckwerte bzw. Rohdifferenzdruckwerte, die keiner Korrektur bezüglich des aktuellen Offsets unterzogen werden, erfasst und gegebenenfalls gespeichert. Dies hat den Vorteil, dass Ungenauigkeiten in der Größe des Offsetparameters für die Erkennung eines falschen Anschlusses keine Rolle spielt.

Bei Vorliegen der stabilen Betriebsbedingungen bzw. Betriebszustände wird dann wenigstens ein für die stabilen Betriebsbedingungen repräsentativer unkorrigierter Differenzdruckwert ermittelt. Der für die stabilen Betriebsbedingungen repräsentative Differenzdruckwert kann dabei beispielsweise durch einen maximalen oder minimalen unkorrigierten Differenzdruckwert in einem vorgegebenen Erfassungszeitintervall oder einen Mittelwert über die erfassten unkorrigierten Differenzdruckwerte in dem vorgegebenen Erfassungszeitintervall gegeben sein.

Ausgehend von diesem für die stabilen Betriebsbedingungen repräsentativen unkorrigierten Differenzdruckwert können dann zwei verschiedene Erkennungen durchgeführt werden.

Zum einen kann während des Betriebs der Brennkraftmaschine bei der ersten Erkennung mit dem ersten Fehlerkriterium für einen falschen Anschluss geprüft werden, ob eine Vertauschung der Anschlüsse vorliegt. Bei dem Fehlerkriterium handelt es sich vorzugsweise um ein Schwellwertkriterium, bei dem der Schwellwert in Abhängigkeit von der erwarteten Drift des Offsetparameterwerts, den bei stabilen Betriebsbedingungen erwarteten Schwankungen des Differenzdrucks und der typischerweise im Betrieb auftretenden Differenzdrücke gewählt werden kann. Insbesondere kann das Fehlerkriterium darin bestehen, dass eine Vertauschung festgestellt wird, wenn der für die stabilen Betriebsbedingungen repräsentative Differenzdruckwert einen vorgegebenen, beispielsweise negativen, Schwellwert unterschreitet. Diese erste Erkennung hat den Vorteil, dass sie bereits während des Betriebs der Brennkraftmaschine und ohne genaue Kenntnis des aktuellen Offsetparameterwerts durchgeführt werden kann.

Zum anderen kann nach Ende des Betriebs der Brennkraftmaschine bei der zweiten Erkennung zunächst ein aktueller Offsetparameterwert ermittelt werden, indem Sensorsignale bei stillstehender Brennkraftmaschine erfasst werden und in Abhängigkeit von den Sensorsignalen der aktuelle Offsetparameterwert ermittelt wird. In Abhängigkeit von dem ermittelten, für die stabilen Betriebsbedingungen repräsentativen unkorrigierten Differenzdruck und dem aktuellen Offsetparameterwert wird dann durch eine Offsetkorrektur ein korrigierter minimaler Differenzdruck ermittelt, indem der Einfluss des Offsetparameterwerts eliminiert wird. Die Formulierung, dass der korrigierte minimale Differenzdruck in Abhängigkeit von dem ermittelten für die stabilen Betriebsbedingungen repräsentativen unkorrigierten Differenzdruckwert und dem ermittelten aktuellen Offsetparameterwert ermittelt wird, bedeutet dabei, dass in die Ermittlung gegebenenfalls noch weitere Werte oder Größen eingehen können.

Damit werden Einflüsse eines unbekannten oder driftenden Offsets der Kennlinie reduziert oder vorzugsweise eliminiert, was den Vorteil hat, dass für die folgende Prüfung des zweiten Fehlerkriteriums ein korrigierter und daher sehr genauer Wert für den minimalen Differenzdruckwert zur Verfügung steht und somit ein falscher Anschluss auch bei nur geringen Differenzdrücken festgestellt werden kann. Da die Ermittlung des Offsetparameterwertes auf der Basis von Daten bei stabilen Betriebsbedingungen erfolgt, ist der ermittelte Wert sehr zuverlässig. Vorzugsweise kann zusätzlich eine Plausibilitätsprüfung stattfinden, ob die verwendeten Betriebsbedingungen nach einem vorgegebenen Kriterium typisch und damit sinnvoll sind oder nicht. In diesem Fall erfolgt eine weitere Verwendung nur, wenn der Wert bei typischen Bedingungen ermittelt wurde.

Bei dem zweiten Fehlerkriterium kann es sich, wie bei dem ersten Fehlerkriterium um ein Schwellwertkriterium handeln, bei dem allerdings, da eine Korrektur für den Einfluss des Offsets bereits durchgeführt wurde, ein anderer Schwellwert verwendet wird. Der Schwellwert kann insbesondere in Abhängigkeit von den bei dem Betrieb zu erwartenden für die stabilen Betriebsbedingungen repräsentativen Differenzdrücken gewählt werden. Ein Vorteil dieses Fehlerkriterium liegt darin, dass es auch bei nur sehr kurzen Betriebszyklen besonders zuverlässig ist. Weiter kann der Einfluss des Offsets sehr weitgehend eliminiert werden, so dass auch bei stark unterschiedlichen Offsets verschiedener Differenzdrucksensoren das gleiche Verfahren zuverlässig eingesetzt werden kann.

Dabei ist es grundsätzlich möglich, dass nur eine von der ersten und der zweiten Erkennung durchgeführt wird. Vorzugsweise werden jedoch beide Erkennungen durchgeführt, was den Vorteil hat, dass sich damit eine besonders sichere und schnelle Erkennung auch unter sehr unterschiedlichen Betriebsbedingungen ergibt.

Das Ergebnis der Prüfung des ersten und/oder zweiten Fehlerkriteriums kann insbesondere gespeichert werden. Darüber hinaus wird vorzugsweise wenigstens bei Erkennung eines Fehlers ein Fehlersignal ausgegeben.

Das Verfahren kann mit der Vorrichtung ausgeführt werden, die hierzu über die Sensorsignalschnittstelle und die mit der Sensorsignalschnittstelle verbundene Erkennungseinrichtung verfügt, die zur Durchführung des Verfahrens ausgebildet ist.

Grundsätzlich ist es denkbar, dass die Vorrichtung und insbesondere die Erkennungseinrichtung durch eine entsprechende, nicht programmierbare Schaltung realisiert sind. Bei der Vorrichtung ist es jedoch bevorzugt, dass die Erkennungseinrichtung einen Speicher, in dem bei der ersten und der zweiten Fehlerprüfung verwendete Daten und Instruktionen eines Computerprogramms gespeichert sind, und einen Prozessor der bei Ausführung der Instruktionen das erfindungsgemäße Verfahren ausführt, umfasst. Diese Ausführungsform hat den Vorteil, dass die Vorrichtung durch eine Steuereinheit für die Steuerung der Brennkraftmaschine, insbesondere eine Motorsteuereinheit bzw. Motorsteuerung gegeben sein kann, in der hierzu ein entsprechendes Computerprogramm bzw. entsprechende Progammmodule gespeichert sein können, das bzw. die durch einen Mikroprozessor der Steuereinheit ausgeführt werden. Die Steuereinheit verfügt häufig ohnehin über die Sensorschnittstelle, da sie den Zustand des Partikelfilters überprüft. Es ist dann in vorteilhafter Weise möglich, nur durch entsprechende Programmierung der Steuereinheit zu der Vorrichtung zu gelangen, wobei die Steuereinheit gleichzeitig noch ihre üblichen Funktionen ausüben kann. Der bei dem Verfahren ermittelte Offsetparameterwert kann dann sofort zur Verwendung bei weiteren Betriebszyklen der Brennkraftmaschine gespeichert und von anderen Softwaremodulen verwendet werden.

Weiterer Gegenstand der Erfindung ist daher auch ein Computerprogramm zur Überprüfung eines korrekten Anschlusses eines Differenzdrucksensors mit einem Hoch- und einem Niederdruckanschluss an einem Abgastrakt einer Brennkraftmaschine parallel zu einem Partikelfilter, das Instruktionen umfasst, bei deren Ausführung eine Datenverarbeitungseinrichtung mit einer Sensorschnittstelle zur Erfassung von Sensorsignalen, die unkorrigierte, an dem Differenzdrucksensor anliegende Differenzdruckwerte wiedergeben, auf Sensorsignale des Differenzdrucksensors hin das erfindungsgemäße Verfahren ausführt und insbesondere während des Betriebs der Brennkraftmaschine geprüft wird, ob gemäß wenigstens einem vorgegebenen Kriterium stabile Betriebsbedingungen herrschen, und wenigstens bei Vorliegen stabiler Betriebsbedingungen aus Sensorsignalen des Differenzdrucksensors wenigstens ein für die stabilen Betriebsbedingungen repräsentativer unkorrigierter Differenzdruckwert ermittelt, und bei einer ersten Erkennung während des Betriebs der Brennkraftmaschine prüft, ob der für die stabilen Betriebsbedingungen repräsentative unkorrigierte Differenzdruck ein erstes vorgegebenes Fehlerkriterium für einen falschen Anschluss erfüllt, und/oder bei einer zweiten Erkennung nach Ende des Betriebs der Brennkraftmaschine ein Wert eines Offsetparameters einer Kennlinie des Differenzdrucksensors ermittelt, in Abhängigkeit von dem ermittelten Offsetparameterwert und dem für die stabilen Betriebsbedingungen repräsentativen unkorrigierten Differenzdruckwert einen korrigierten minimalen Differenzdruckwert ermittelt und prüft, ob der korrigierte minimale Differenzdruckwert ein zweites vorgegebenes Fehlerkriterium für einen falschen Anschluss erfüllt.

Darüber hinaus ist Gegenstand der Erfindung ein computerlesbarer Datenträger, auf dem das erfindungsgemäße Computerprogramm gespeichert ist. Als Datenträger kommen insbesondere magnetische, magneto-optische oder optische Datenträger oder nichtflüchtige Speicherelemente, beispielsweise Flash-ROM- oder EEPROM-Bauelemente, in Betracht.

Im Prinzip genügt es, dass bei dem Verfahren nur ein Zeitintervall ermittelt wird, in dem stabile Betriebsbedingungen herrschen, und die in dem Zeitintervall erfassten Differenzdruckwerte verwendet werden. Beispielsweise kann ausgehend von einem Differenzdruck zu einem vorgegebenen Zeitpunkt ein Zeitintervall ermittelt werden, in dem der Differenzdruck gemäß dem vorgegebenen Kriterium für das Vorliegen von stabilen Betriebsbedingungen wenig schwankt und insoweit stabile Betriebsbedingungen vorliegen. Wenn das Zeitintervall hinreichend lang ist, können die darin erfassten Differenzdruckwerte bei dem Verfahren verwendet werden. Bei dem Verfahren ist es jedoch bevorzugt, dass während des Betriebs der Brennkraftmaschine in mehreren aufeinanderfolgenden Zeitintervallen jeweils die Prüfung auf das Vorliegen stabiler Betriebsbedingungen und wenigstens bei Vorliegen der stabilen Betriebsbedingungen die Ermittlung des für die stabilen Betriebsbedingungen repräsentativen unkorrigierten Differenzdruckwertes für das jeweilige Zeitintervall durchgeführt werden. Die Erkennungseinrichtung der Vorrichtung ist dazu vorzugsweise so ausgebildet und das Computerprogramm enthält vorzugsweise solche Instruktionen, dass während des Betriebs in mehreren aufeinanderfolgenden Zeitintervallen jeweils die Prüfung auf das Vorliegen stabiler Betriebsbedingungen und wenigstens bei Vorliegen der stabilen Betriebsbedingungen die Ermittlung des für die stabilen Betriebsbedingungen repräsentativen unkorrigierten Differenzdruckwertes für das jeweilige Zeitintervall durchgeführt werden. Diese Ausführungsform hat den Vorteil, dass die Ermittlung der für die stabilen Betriebsbedingungen repräsentativen unkorrigierten Differenzdruckwerte für jedes Zeitintervall getrennt erfolgen kann, so dass für die nachfolgende erste und/oder zweite Erkennung eine größere und damit zuverlässigere Datenbasis zur Verfügung steht. Die Längen der Zeitintervalle sind vorzugsweise so vorgegeben, dass in ihnen mehrere Differenzdruckwerte erfasst werden können, so dass eine zuverlässige Prüfung auf stabile Betriebsbedingungen möglich ist.

Die Längen der Zeitintervalle können dabei beliebig vorgegeben werden, vorzugsweise sind sie jedoch gleich lang. Dies hat den Vorteil, dass die Prüfung auf das Vorliegen stabiler Betriebsbedingungen einfacher durchgeführt werden kann und eine wiederholte Ermittlung des für die stabilen Betriebsbedingungen repräsentativen unkorrigierten Differenzdruckwertes erleichtert wird. Darüber hinaus sind die ermittelten für die stabilen Betriebsbedingungen repräsentativen unkorrigierten Differenzdruckwerte besser vergleichbar, da sie jeweils gleich lange Zeitintervalle repräsentieren.

Erfolgen eine Prüfung auf das Vorliegen von stabilen Betriebsbedingungen und die Erfassung von unkorrigierten Differenzdruckwerten in mehreren Zeitintervallen, ist es bei dem Verfahren bevorzugt, dass bei der ersten Erkennung für jedes der Zeitintervalle mit stabilen Betriebsbedingungen die erste Fehlerprüfung durchgeführt wird, und dass bei einer Fehlerbestätigungsprüfung ein drittes Fehlerkriterium, ob ein Fehler gemäß dem ersten Fehlerkriterium in wenigstens zwei Zeitintervallen mit stabilen Betriebsbedingungen festgestellt wurde, geprüft wird. Die Erkennungseinrichtung der Vorrichtung ist dazu vorzugsweise so ausgebildet und das Computerprogramm enthält vorzugsweise solche Instruktionen, dass bei Prüfung auf das Vorliegen von stabilen Betriebsbedingungen und Erfassung von unkorrigierten Differenzdruckwerten in mehreren Zeitintervallen bei der ersten Erkennung für jedes der Zeitintervalle mit stabilen Betriebsbedingungen die erste Fehlerprüfung durchgeführt wird, und dass in einer Fehlerbestätigungsprüfung ein drittes Fehlerkriterium, ob ein Fehler gemäß dem ersten Fehlerkriterium in wenigstens zwei Zeitintervallen mit stabilen Betriebsbedingungen festgestellt wurde, geprüft wird. Diese Ausführungsform hat den Vorteil, dass eventuell durch statistische Messfehler in den Differenzdruckwerten bei ungünstigen Betriebsbedingungen bedingte und daher unzutreffende Fehlererkennungen ausgesondert werden können. Ein Fehler und damit eine Anschlussvertauschung wird nur erkannt, wenn die erste Fehlerkennung in zwei Zeitintervallen mit stabilen Betriebsbedingungen einen Fehler erkannt hat und somit die erste Erkennung des Fehlers durch die zweite bestätigt wird. Vorzugsweise wird gefordert, dass ein Fehler in mehr als zwei Zeitintervallen mit stabilen Betriebsbedingungen erkannt wird. Alternativ kann vorzugsweise geprüft werden, ob die beiden Fehlererkennungen in Zeitintervallen mit stabilen Betriebsbedingungen erfolgten, die nicht mehr als eine vorgegebene Zeitspanne auseinanderliegen. Die Zeitspanne umfasst vorzugsweise etwa 5 bis 10 Zeitintervalle. Ein Fehlersignal bzw. das Ergebnis der Prüfung des Fehlerbestätigungskriteriums kann dann statt der Fehlersignale bzw. der Prüfungsergebnisse für die einzelnen Zeitintervalle erzeugt bzw. abgespeichert werden. Für diese Ausführungsform wird vorzugsweise das Ergebnis der ersten Fehlererkennung für wenigstens so viele Zeitintervalle gespeichert, wie zur Erfüllung des dritten Fehlerkriteriums notwendig sind.

Die Prüfung auf das Vorliegen von stabilen Betriebsbedingungen und Erfassung von unkorrigierten Differenzdruckwerten in mehreren Zeitintervallen ist jedoch auch für die zweite Fehlererkennung vorteilhaft. Bei dem Verfahren, bei dem eine Prüfung auf das Vorliegen von stabilen Betriebsbedingungen und Erfassung von unkorrigierten Differenzdruckwerten in mehreren Zeitintervallen erfolgt, werden vorzugsweise bei der zweiten Erkennung zur Ermittlung des korrigierten minimalen Differenzdruckwertes die für die stabilen Betriebsbedingungen repräsentativen unkorrigierten Differenzdruckwerte für die Zeitintervalle mit stabilen Betriebsbedingungen verwendet. Die Erkennungseinrichtung der Vorrichtung ist dazu vorzugsweise so ausgebildet und das Computerprogramm enthält vorzugsweise solche Instruktionen, dass, wenn eine Prüfung auf das Vorliegen von stabilen Betriebsbedingungen und Erfassung von unkorrigierten Differenzdruckwerten in mehreren Zeitintervallen erfolgt, bei der zweiten Erkennung zur Ermittlung des korrigierten minimalen Differenzdrucks die für die stabilen Betriebsbedingungen repräsentativen unkorrigierten Differenzdrücke für die Zeitintervalle mit stabilen Betriebsbedingungen verwendet werden. Diese Ausführungsform hat den Vorteil, dass bei der zweiten Fehlererkennung aufgrund der breiteren Datenbasis eine genauere Fehlererkennung möglich ist.

Vorzugsweise wird bei dem Verfahren aus den unkorrigierten für die stabilen Betriebsbedingungen repräsentativen Differenzdruckwerten für die Zeitintervalle mit stabilen Betriebsbedingungen ein globaler minimaler Differenzdruckwert, der einen globalen minimaler Differenzdruck repräsentiert, und aus dem globalen minimalen Differenzdruckwert unter Verwendung des ermittelten Offsetparameterwerts der korrigierte minimale Differenzdruck ermittelt. Der globale minimale Differenzdruckwert kann beispielsweise als das Minimum aller unkorrigierten für die stabilen Betriebsbedingungen repräsentativen Differenzdruckwerte für die Zeitintervalle mit stabilen Betriebsbedingungen ermittelt werden. Der globale minimale Differenzdruckwert braucht jedoch nur den globalen minimalen Differenzdruck zu repräsentieren. Es ist daher auch möglich, einen Mittelwert über N kleinste der unkorrigierten für die stabilen Betriebsbedingungen repräsentativen Differenzdruckwerte zu verwenden, wobei N eine natürliche Zahl ist. So können statistische Fehler herausgemittelt werden. Die Ermittlung des globalen minimalen Differenzdruckwertes hat, insbesondere wenn der globale minimale Differenzdruckwert als Minimum der für die stabilen Betriebsbedingungen repräsentativen unkorrigierten Differenzdruckwerte ermittelt wird, den Vorteil, dass dieser eine sichere Erkennung einer Anschlussvertauschung zulässt.

Bei dem Verfahren ist es weiter bevorzugt, dass in Abhängigkeit von dem Ergebnis wenigstens einer der Fehlerprüfungen oder der Fehlerbestätigungsprüfung ein Fehlersignal ausgegeben wird. Die Vorrichtung kann hierzu vorzugsweise über eine Ausgabeschnittstelle, bei der es sich um eine Hard- und/oder Softwareschnittstelle handeln kann, verfügen, und die Erkennungseinrichtung der Vorrichtung ist dazu vorzugsweise so ausgebildet und das Computerprogramm enthält vorzugsweise solche Instruktionen, dass in Abhängigkeit von dem Ergebnis wenigstens einer der Fehlerprüfungen ein Fehlersignal ausgegeben wird. Insbesondere kann der Typ der Fehlererkennung, die den Fehler erkannt hat, durch das Fehlersignal wiedergegeben werden. Diese Ausführungsform hat den Vorteil, dass eine einfache Diagnose des Einbauzustands des Sensors möglich ist. Darüber hinaus kann bei dem Verfahren das Fehlersignal je nach Anforderungen an die Sicherheit und Empfindlichkeit der Erkennung ausgegeben werden, wenn das erste oder das zweite oder das dritte Fehlerkriterium erfüllt ist, oder wenn sowohl die erste als auch die zweite Erkennung einen Fehler, d.h. eine Schlauchvertauschung festgestellt haben.

Das Vorliegen von stabilen Betriebsbedingungen kann auf unterschiedliche Art und Weise erkannt werden. Die möglichen Varianten können dabei alternativ oder kumulativ bzw. in Verbindung miteinander verwendet werden. Gemäß einer ersten Variante wird zur Prüfung des Vorliegens stabiler Betriebsbedingungen als Kriterium geprüft, ob die Schwankung der erfassten unkorrigierten Differenzdruckwerte gemäß einem vorgegebenen Konstanzkriterium hinreichend klein ist. Vorzugsweise ist die Erkennungseinrichtung hierzu ausgebildet. Diese Ausführungsform hat den Vorteil, dass die unmittelbar relevanten Betriebsparameter, nämlich der Druck des Abgases stromaufwärts und stromabwärts nahe dem Partikelfilter, verwendet werden. Bei Verwendung mehrerer Zeitintervalle erfolgt eine Prüfung für jedes Zeitintervall. Als Maß für die Schwankung kann beispielsweise die Standardabweichung ermittelt und mit einem Grenzwert verglichen werden. Besonders bevorzugt wird jedoch geprüft, ob der minimale und der maximale unkorrigierte Differenzdruck gemäß einem vorgegebenen Konstanzkriterium übereinstimmen. Als Konstanzkriterium kann dabei insbesondere verwendet werden, dass die Differenz zwischen dem maximalen und dem minimalen unkorrigierten Differenzdruck kleiner als ein vorgegebener Grenzwert ist. Dieser kann insbesondere in Abhängigkeit von der Messgenauigkeit des Sensors und den zu erwartenden statistischen Druckschwankungen auch bei stabilen Betriebsbedingungen gewählt werden. Diese Ausführungsform hat den Vorteil, dass die Prüfung sehr schnell erfolgen kann.

Für die Erkennung stabiler Betriebsbedingungen brauchen jedoch nicht unbedingt Eigenschaften des Abgases selbst verwendet zu werden. So wird bei einer weiteren bevorzugten Variante des Verfahren zur Prüfung des Vorliegens stabiler Betriebsbedingungen wenigstens ein Wert wenigstens eines Parameters oder einer Größe, die den Betriebszustand der Brennkraftmaschine oder anderer Einrichtungen im Abgastrakt vor dem Partikelfilter wenigstens teilweise wiedergeben, erfasst und der Wert bei der Prüfung des Kriteriums verwendet. Dazu weist die Vorrichtung vorzugsweise eine Schnittstelle zu einer Motorsteuerung der Brennkraftmaschine auf, und die Erkennungseinrichtung erfasst über die Schnittstelle Signale der Motorsteuerung, die wenigstens einen Wert wenigstens eines Parameters oder einer Größe, die den Betriebszustand der Brennkraftmaschine oder anderer Einrichtungen im Abgastrakt vor dem Partikelfilter wenigstens teilweise wiedergeben, repräsentieren, und verwendet zur Prüfung des Vorliegens stabiler Betriebsbedingungen den wenigstens einen Wert. Das Computerprogramm verfügt dazu vorzugsweise über Instruktionen, auf die hin bei Ausführung des Programms zur Prüfung des Vorliegens stabiler Betriebsbedingungen wenigstens ein Wert wenigstens eines Parameters oder einer Größe, die den Betriebszustand der Brennkraftmaschine oder anderer Einrichtungen im Abgastrakt vor dem Partikelfilter wenigstens teilweise wiedergeben, erfasst und der Wert bei der Prüfung des Kriteriums verwendet wird. Diese Variante hat den Vorteil, dass Werte solcher Parameter und Größen bei modernen Brennkraftmaschinen ohnehin in der Motorsteuerung verfügbar sind und die Eigenschaften des Abgasstroms durch den Betriebszustand der Brennkraftmaschine bzw. dessen Änderung weitgehend bestimmt sind. Es sind also keine weiteren Sensoren notwendig. Insbesondere kann zur Erkennung des stabilen Betriebszustand ein zeitlicher Verlauf des wenigstens einen Parameters oder der wenigstens einen Größe erfasst und bei der Erkennung verwendet werden. Bei der Schnittstelle kann es sich insbesondere um eine Softwareschnittstelle handeln, wenn die Vorrichtung in die Motorsteuerung integriert ist. Auch bei dieser Variante kann die Erfassung der Werte des Parameters oder der Größe vorzugsweise in jedem Zeitintervall durchgeführt werden, wenn mehrere Zeitintervalle verwendet werden. Als Kriterium kann vorzugsweise verwendet werden, dass die Schwankung der Werte des wenigstens einen Parameters oder der wenigstens einen Größe für das Zeitintervall kleiner als ein in Abhängigkeit von dem Parameter oder der Größe vorgegebener Grenzwert ist. Die Schwankung kann wie bei der Verwendung des Differenzdruckwertes ermittelt werden. Das Kriterium kann jedoch auch die gleichzeitige Prüfung mehrerer Betriebsparameter der Brennkraftmaschine auf Schwankungen hin beinhalten, bei denen unterschiedliche Grenzwerte verwendet werden können und ein stabile Betriebsbedingungen nur erkannt werden, wenn alle Prüfungen hinreichend kleine Schwankungen ergeben.

Als für die stabilen Betriebsbedingungen repräsentativer unkorrigierter Differenzdruck kann beispielsweise der minimale Differenzdruck verwendet werden.

Es ist jedoch bevorzugt, dass zur Ermittlung des für die stabilen Betriebsbedingungen repräsentativen unkorrigierten Differenzdrucks der jeweilige maximale unkorrigierte Differenzdruck ermittelt und als für die stabilen Betriebsbedingungen repräsentativer unkorrigierter Differenzdruck verwendet wird. Bei der Vorrichtung ist dazu die Erkennungseinrichtung dazu ausgebildet, zur Ermittlung des für die stabilen Betriebsbedingungen repräsentativen unkorrigierten Differenzdrucks der jeweilige maximale unkorrigierte Differenzdruck zu ermitteln und als für die stabilen Betriebsbedingungen repräsentativen unkorrigierten Differenzdruck zu verwenden. Weiterhin weist das Computerprogramm vorzugsweise Instruktion auf, um zur Ermittlung des für die stabilen Betriebsbedingungen repräsentativen unkorrigierten Differenzdrucks den jeweiligen maximalen unkorrigierten Differenzdruck zu ermitteln und als für die stabilen Betriebsbedingungen repräsentativen unkorrigierten Differenzdruck zu verwenden. Die Verwendung des maximalen unkorrigierten Differenzdrucks hat den Vorteil, dass dieser, insbesondere wenn er negativ sein sollte, mit größerer Genauigkeit erfasst werden kann, als der minimale unkorrigierte Differenzdruck.

Der Offsetparameterwert kann nach Beendigung des Betriebs der Brennkraftmaschine in beliebiger, insbesondere bereits bekannter Weise ermittelt werden. Es ist bevorzugt, den ermittelten Offsetparameterwert zu speichern, was den Vorteil hat, dass dieser im nächsten Betriebszyklus zur Verfügung steht, auch wenn kein Fehler festgestellt wurde. Dabei kann der Offsetparameterwert, außer direkt nach einem Tausch des Sensors, als gleitender Mittelwert über mehrere Betriebszyklen ermittelt werden, wodurch dessen Genauigkeit in vorteilhafter Weise erhöht wird.

Die Erfindung wird im Folgenden anhand der Zeichnungen noch weiter beispielhaft erläutert. Es zeigen:

Fig. 1    eine schematische Darstellung einer Brennkraftmaschine mit einem Abgastrakt,

Fig. 2    eine schematische Darstellung einer Kennlinie des Differenzdrucksensors in Fig. 1,

Fig. 3    ein Diagramm mit einem zeitlichen Verlauf von beim Betrieb der Brennkraftmaschine in Fig. 1 erzeugten Differenzdruckwerten, und

Fig. 4    ein stark vereinfachtes Ablaufdiagramm eines Verfahrens zur Überprüfung eines korrekten Anschlusses des Differenzdrucksensors an den Abgastrakt in Fig. 1.

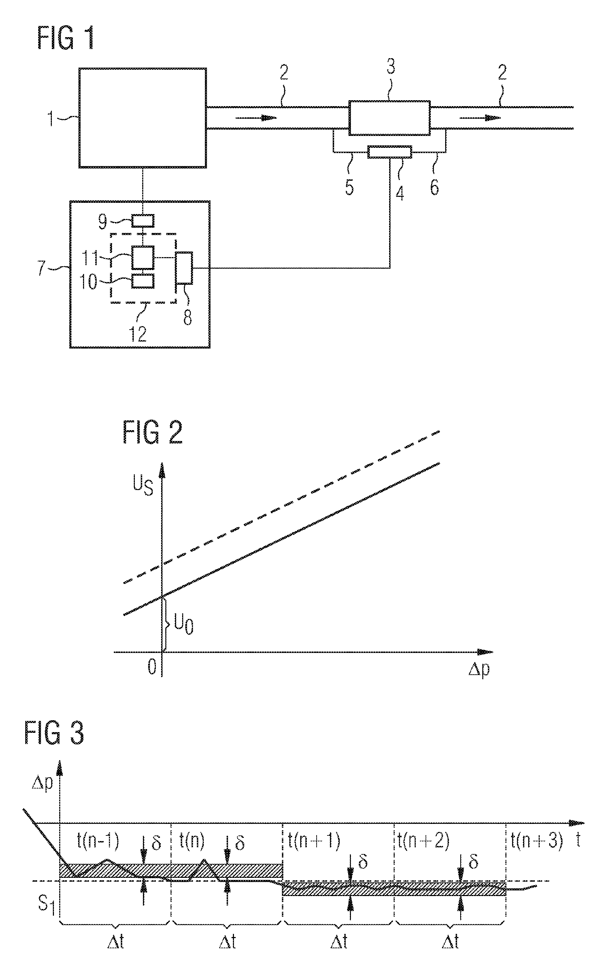

In Fig. 1 ist eine Brennkraftmaschine 1, im Beispiel ein Dieselmotor, mit einem Abgastrakt 2 verbunden, der von der Brennkraftmaschine beim Betrieb erzeugte Abgase abführt. In dem Abgastrakt 2 ist ein üblicher Partikelfilter 3 angeordnet, der Partikel aus dem Abgas der Brennkraftmaschine 1 herausfiltert. Parallel zu dem Partikelfilter 3 ist ein Differenzdrucksensor 4 mit seinem Hochdruckanschluss 5 nahe dem Partikelfilter 3 an den Abgastrakt 2 stromaufwärts des Partikelfilters 3 und mit einem Niederdruckanschluss 6 nahe dem Partikelfilter 3 an den Abgastrakt 2 stromabwärts des Partikelfilters 3 angeschlossen, so dass der Partikelfilter 3 einen Druckabfall des Abgasstroms über den Partikelfilter 3 bzw. einen durch den Partikelfilter 3 erzeugten Differenzdruck erfassen und entsprechende Sensorsignale erzeugen kann.

Der Differenzdrucksensor 4 ist mit einer Motorsteuerung, d.h. einer Motorsteuereinheit 7, verbunden, die teilweise als Vorrichtung zur Erkennung eines fehlerhaften Anschlusses des Partikelfilters 3 an den Abgastrakt 2, insbesondere einer Schlauch- bzw. Anschlussvertauschung, und teilweise zur Steuerung der Brennkraftmaschine 1 dient. Die allein zur Steuerung der Brennkraftmaschine 1 verwendeten Signalverbindungen und Einrichtungen sind der Übersichtlichkeit halber in den Figuren nicht gezeigt.

Beim Betrieb der Brennkraftmaschine 1 erzeugt diese feine Partikel, insbesondere Rußpartikel im Abgas, die durch den Partikelfilter 3 aus dem Abgas herausgefiltert werden. Die herausgefilterten Partikel verbleiben im Partikelfilter 3 und erhöhen mit zunehmender Gesamtbetriebszeit den Strömungswiderstand des Partikelfilters 3. Dies hat zwei Konsequenzen: Erstens muss der Partikelfilter 3 nach einiger Zeit gereinigt werden, d.h. die Partikel, die sich in dem Partikelfilter angesammelt haben, müssen entfernt werden. Um möglichst selten eine Reinigung durchführen zu müssen, sollte möglichst genau der Zustand des Partikelfilters 3 ermittelt werden. Zweitens erzeugt der sich ändernden Strömungswiderstand einen sich bei gleichem Abgasstrom ändernden Druckabfall über den Partikelfilter 3, der mit dem Differenzdrucksensor 4 erfasst und zur Diagnose des Partikelfilters 3 verwendet werden kann.

Der Differenzdrucksensor 4 erfasst die an ihm anliegende Druckdifferenz bzw. den an ihm anliegenden Differenzdruck, d.h. den Differenzdruck zwischen seinem Hochdruckanschluss 5 und seinem Niederdruckanschluss 6, und erzeugt ein entsprechendes Sensorsignal. Eine Kennlinie des Differenzdrucksensors 4, d.h. der Zusammenhang zwischen Sensorsignalspannung $U_S$ und an dem Sensor 4 anliegendem Differenzdruck $\Delta p$ ist beispielhaft in Fig. 2 gezeigt. Die Kennlinie ist in sehr guter Näherung linear und hat einen Offset $U_0$ bei einem Differenzdruck $\Delta p$ von 0 bar. Bedingt durch eine alterungsbedingte Drift kann sich der Wert des Offsets verändern, was in Fig. 2 durch die gestrichelte Linie angedeutet ist. Bei negativem Differenzdruck, d.h. wenn der Druck an dem Hochdruckanschluss 5 kleiner ist als an dem Niederdruckanschluss 6, wird die Messung sehr ungenau. Es ist daher für eine korrekte Funktion des Differenzdrucksensors 4 in dem in Fig. 1 gezeigten System wichtig, dass der Differenzdrucksensor 4 tatsächlich korrekt mit dem Abgastrakt 2 parallel zu dem Partikelfilter 3 verbunden ist, d.h. der Hochdruckanschluss 5 mit dem Abgastrakt 2 stromaufwärts des Partikelfilters 3 und der Niederdruckanschluss 6 mit dem Abgastrakt 2 stromabwärts des Partikelfilters 3.

Die Motorsteuereinheit 7 dient neben der Steuerung der Brennkraftmaschine 1 der Auswertung der Sensorsignale des Differenzdrucksensors 4 und verfügt daher über eine Sensorschnittstelle 8, mit der ein Signalausgang des Differenzdrucksensors 4 verbunden ist. Die Motorsteuereinheit 7 verfügt weiterhin über eine Schnittstelle 9 zu elektrischen Einrichtungen der Brennkraftmaschine, eine Speichereinrichtung 10 mit einem flüchtigen und einem nichtflüchtigen Speicher und einen mit der Speichereinrichtung 10 verbundenen Prozessor 11, der ein in dem nichtflüchtigen Speicher der Speichereinrichtung 10 gespeichertes Computerprogramm nach einer ersten bevorzugten Ausführungsform der Erfindung ausführt.

Das Computerprogramm umfasst zum einen Code zur Steuerung der Brennkraftmaschine, der als bekannt vorausgesetzt wird und daher im Folgenden nicht mehr beschrieben wird.

Das Computerprogramm umfasst weiter Instruktionen zur Durchführung eines Verfahrens zur Erkennung eines fehlerhaften Anschlusses des Differenzdrucksensors 4 mit einem Hoch- und einem Niederdruckanschluss 5 bzw. 6 an den Abgastrakt 2 der Brennkraftmaschine 1 parallel zu dem Partikelfilter 4, insbesondere einer Vertauschung der Anschlüsse, nach einer ersten bevorzugten Ausführungsform der Erfindung. Die Motorsteuereinheit 7 bildet daher auch eine Vorrichtung zur Erkennung eines fehlerhaften Anschlusses des Differenzdrucksensors 4 mit einem Hoch- und einem Niederdruckanschluss 5 bzw. 6 an den Abgastrakt 2 der Brennkraftmaschine 1 parallel zu dem Partikelfilter 4 nach einer ersten bevorzugten Ausführungsform der Erfindung. Der Prozessor 11 mit der Speichereinrichtung 10 bildet dabei eine mit den Schnittstellen 8 und 9 verbundene Erkennungseinrichtung 12, die Sensorsignale des Differenzdrucksensors 4 verarbeitet und die Überprüfung des korrekten Anschlusses des Differenzdrucksensors 4 prüft.

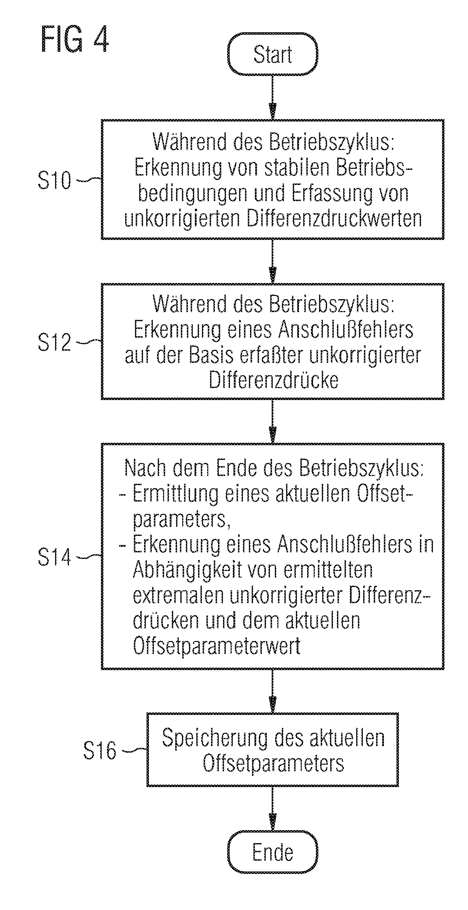

Das von der Vorrichtung, genauer der Erkennungseinrichtung 12 bzw. dem Prozessor 11 darin, ausgeführte Verfahren ist schematisch und stark vereinfacht in Fig. 4 dargestellt.

Es lässt sich in drei Abschnitte S10, S12 und S14 unterteilen.

In dem ersten Abschnitt S10 werden nach dem Start der Brennkraftmaschine 1 während deren Betrieb in aufeinander folgenden Zeitintervallen unkorrigierte Differenzdrücke erfasst und es wird geprüft, ob stabile Betriebsbedingungen in dem Abgastrakt vorliegen.

In dem zweiten Abschnitt S12 erfolgt eine erste Erkennung eines Anschlussfehlers, d.h. einer Vertauschung der Verbindungen zwischen Abgastrakt 2 und Hoch- bzw. Niederdruckanschluss 5 bzw. 6, unter Verwendung der in Abschnitt S10 mittels des Differenzdrucksensors 4 erfassten unkorrigierten Differenzdruckwerte.

In dem dritten Abschnitt S14, der nach dem Ende des Betriebszyklus durchgeführt wird, erfolgen eine Bestimmung eines aktuellen Offsetparameterwertes und eine zweite Erkennung eines Anschlussfehlers in Abhängigkeit von dem aktuellen Offsetparameterwert und für die stabilen Betriebsbedingungen repräsentativen unkorrigierten Differenzdruckwerten, die in Abschnitt S12 ermittelt wurden.

In dem ersten Abschnitt S10 werden genauer zunächst in vorgegebenen Zeitintervallen unkorrigierte Differenzdruckwerte erfasst. Dazu werden im vorliegenden Ausführungsbeispiel die Differenzdrücke in konstanten Zeitabständen erfasst, so dass die Zeitintervalle durch eine vorgegebene Anzahl aufeinanderfolgend erfasster Differenzdrücke gegeben sind. In anderen Ausführungsbeispielen können die Zeitintervalle auch durch einen Zeitgeber festgelegt werden. Die Länge Δt der Zeitintervalle liegt vorzugsweise zwischen 1 und 10 Sekunden. In diesem Ausführungsbeispiel beträgt die Länge eines Zeitintervalls etwa 8 Sekunden, innerhalb dessen beispielsweise 100 Differenzdruckwerte aus entsprechenden Sensorsignalen des Differenzdrucksensors 4 erfasst werden. Da diese Werte zunächst keiner Korrektur unterzogen werden, werden sie als unkorrigierte Differenzdruckwerte bezeichnet.

Für alle Zeitintervalle werden während des Betriebs der Brennkraftmaschine die folgenden Operationen ausgeführt.

Nach Ablauf eines Zeitintervalls und damit nach Erfassung der Differenzdruckwerte wird für das Zeitintervall geprüft, ob gemäß wenigstens einem vorgegebenen Kriterium in diesem Zeitintervall stabile Betriebsbedingungen herrschten. Bei stabilen Betriebsbedingungen sollten keine oder nur sehr geringe Schwankungen der unkorrigierten Differenzdruckwerte in einem Zeitintervall auftreten. In diesem Ausführungsbeispiel werden daher der minimale und der maximale unkorrigierte Differenzdruckwert $\Delta p_{min}$ bzw. $\Delta p_{max}$ für das Zeitintervall ermittelt. Es wird dann als Kriterium überprüft, ob die Schwankungen der unkorrigierten Differenzdruckwerte kleiner als ein vorgegebener Grenzwert δ ist, der in beispielsweise in Abhängigkeit von den Eigenschaften der Brennkraftmaschine und des Abgastrakts sowie der Empfindlichkeit und des Rauschens des Differenzdrucksensor 4 gewählt sein kann. Dazu wird genauer geprüft, ob folgende Gleichung gilt

$$\Delta p_{max} - \Delta p_{min} < \delta.$$

Ist dieses Kriterium erfüllt, herrschten hinreichend stabile Betriebsbedingungen während des Zeitintervalls und die Differenzdruckwerte können zur ersten Erkennung herangezogen werden.

Dazu, und in Vorbereitung der zweiten Erkennung, wird in Abschnitt S12, dann ein für die stabilen Betriebsbedingungen repräsentativer unkorrigierter Differenzdruckwert $\Delta p_{rep}$ für das Zeitintervall ermittelt, im vorliegenden Ausführungsbeispiel wird als für die stabilen Betriebsbedingungen repräsentativer unkorrigierter

Differenzdruck $\Delta p_{rep}$ der maximale unkorrigierte Differenzdruck $\Delta p_{max}$ verwendet.

Bei der ersten Erkennung während des Betriebs der Brennkraftmaschine 1 wird nun geprüft, ob der für die stabilen Betriebsbedingungen repräsentative unkorrigierte Differenzdruck $\Delta p_{rep}$ ein erstes vorgegebenes Fehlerkriterium für einen falschen Anschluss erfüllt. Im vorliegenden Ausführungsbeispiel wird als Fehlerkriterium ein Schwellwertkriterium verwendet und überprüft, ob der für die stabilen Betriebsbedingungen repräsentative unkorrigierte Differenzdruckwert einen vorgegebenen ersten Schwellwert $S_1$ unterschreitet:

$$\Delta p_{rep} < S_1.$$

Der Schwellwert $S_1$ ist dabei in Abhängigkeit von einem zu erwartenden Standard-Offsetparameterwert des Sensors 4 und von zu erwartenden Differenzdrücken während des Betriebs gewählt und kann insbesondere negativ sein.

Wird das Fehlerkriterium erfüllt, wird für das Zeitintervall ein entsprechender Fehlerwert in der Speichereinrichtung 10 gespeichert.

Wurden keine stabilen Betriebsbedingungen erkannt oder wurde das Fehlerkriterium nicht erfüllt, wird kein Fehlerwert bzw. ein keinen Fehler anzeigender Fehlerwert gespeichert.

Daraufhin wird in einer Fehlerbestätigungsprüfung nach einem dritten Fehlerkriterium geprüft, ob für eine vorgegebene Anzahl von Zeitintervallen ein Fehler erkannt wurde. Nur in diesem Fall wird für die erste Erkennung ein unkorrekter Anschluss bzw. ein Anschlussfehler erkannt. Die Anzahl ist dabei so gewählt, dass nur zufällig, und damit fälschlicherweise erkannte Fehler nicht zu einer Erzeugung eines Fehlersignals führen. Im Beispiel kann als Anzahl beispielsweise die Zahl 10 gewählt werden.

Wird das dritte Fehlerkriterium erfüllt, d.h. der Fehler hinreichend oft wiedererkannt bzw. bestätigt, wird ein entsprechendes Fehlersignal erzeugt und das Auftreten eines Fehlers durch Abspeichern eines entsprechenden Wertes in der Speichereinrichtung 10 festgehalten. Sowohl das Fehlersignal als auch der gespeicherte Wert geben wieder, dass der Fehler bei der ersten Erkennung gefunden wurde.

Der Verlauf des unkorrigierten Differenzdrucks, die Erkennung eines stabilen Betriebszustands und das Schwellwertkriterium sind in Fig. 3 beispielhaft veranschaulicht. Die erfassten unkorrigierten Differenzdrücke verändern sich je nach Betriebszustand. Während in den Zeitintervallen zwischen t(n) und t(n-1) sowie t(n+1) und t(n) Schwankungen auftreten, die keinen stabilen Betriebszustand anzeigen, unterschreitet die Schwankung in den Zeitintervallen zwischen t(n+2) und t(n+1) sowie t(n+3) und t(n+2) den Grenzwert δ, angedeutet durch eine Schraffur, so dass in diesen Zeitintervallen stabile Betriebsbedingungen vorliegen. In diesen Intervallen unterschreiten die repräsentativen unkorrigierten Differenzdruckwerte auch den Schwellwert $S_1$.

Während des Betriebs der Brennkraftmaschine überprüft die Vorrichtung parallel dauernd, ob der Betrieb der Brennkraftmaschine beendet wurde.

Nach Ende des Betriebszyklus der Brennkraftmaschine 1 wird im dritten Abschnitt S14 die zweite Erkennung durchgeführt, bei der ein aktueller Wert des Offsetparameters der Kennlinie des Differenzdrucksensors 4 ermittelt, in Abhängigkeit von dem ermittelten Offsetparameterwert und dem für die stabilen Betriebsbedingungen repräsentativen unkorrigierten Differenzdruckwert ein korrigierter minimaler Differenzdruckwert ermittelt und geprüft wird, ob der korrigierte minimale Differenzdruckwert ein zweites vorgegebenes Fehlerkriterium für einen fehlerhaften Anschluss, insbesondere eine Anschlussvertauschung, erfüllt.

Dazu wird das Sensorsignal des Differenzdrucksensors 4, das den unkorrigierten Differenzdruck wiedergibt und dem dann an dem Sensor 4 anliegenden Differenzdruck 0 bar entsprechen sollte, erfasst und der aktuelle Offsetparameterwert auf diesen Wert gesetzt.

Im folgenden Schritt wird ein globaler minimaler unkorrigierter Differenzdruckwert als Minimum der für die stabilen Betriebsbedingungen repräsentativen, unkorrigierten Differenzdruckwerte für alle Zeitintervalle mit stabilen Betriebsbedingungen ermittelt.

Dieser globale minimale unkorrigierte Differenzdruckwert wird dann unter Verwendung des ermittelten aktuellen Offsetparameterwertes und der Kennlinie des Differenzdrucksensors 4 korrigiert, wodurch sich ein korrigierter minimaler Differenzdruckwert $\Delta p_{korr,min}$ ergibt.

Dieser korrigierte minimale Differenzdruckwert $\Delta p_{korr,min}$ wird in dem zweiten Fehlerkriterium verwendet, bei dem es sich im vorliegenden Ausführungsbeispiel um ein Schwellwertkriterium handelt. Genauer wird geprüft, ob die Bedingung

$$\Delta p_{korr,min} < S_2$$

mit einem vorgegebenen Schwellwert $S_2$ erfüllt ist. Ist dies der Fall, wird ein Fehlersignal erzeugt und ein entsprechender Fehlerwert in der Speichereinrichtung 10 gespeichert.

Darüber hinaus wird in Schritt S16 der ermittelte aktuelle Offsetparameterwert in dem nichtflüchtigen Speicher der Speichereinrichtung 10 gespeichert, so dass dieser in dem nächsten Betriebszyklus verwendet werden kann.

Anhand der Fehlersignale, die beispielsweise über eine Anzeige ausgegeben oder an ein Diagnosesystem abgegeben werden, kann ein Monteur eine Vertauschung der Anschlüsse leicht feststellen und für einen korrekten Anschluss sorgen.

Die Erkennung kann sehr schnell bei nur kurzen Betriebszyklen, auch bei nur kleiner Last sehr zuverlässig erfolgen, wobei außer dem Computerprogramm keine zusätzlichen Einrichtungen notwendig sind.

Ein weiteres bevorzugtes Ausführungsbeispiel unterscheidet sich von dem ersten Ausführungsbeispiel dadurch, dass Differenzdruckwerte durch Pegel der Sensorsignale dargestellt und auch so verarbeitet werden.

In einer anderen bevorzugten Ausführungsform werden zur Bestimmung des aktuellen Offsetparameterwertes mehrere Sensorsignale erfasst, und der Offsetparameterwert wird durch Mittelwertbildung ermittelt.

Noch ein anderes Ausführungsbeispiel unterscheidet sich von dem ersten Ausführungsbeispiel dadurch, dass als für die stabilen Betriebsbedingungen repräsentativer unkorrigierter Differenzdruckwert der Mittelwert über die erfassten unkorrigierten Differenzdruckwerte in dem jeweiligen Zeitintervall verwendet wird.

Ein weiteres bevorzugtes Ausführungsbeispiel unterscheidet sich von dem ersten Ausführungsbeispiel durch die Erkennung von stabilen Betriebsbedingungen. Dazu ist in der Erkennungseinrichtung eine in Fig. 1 nicht gezeigte Softwareschnittstelle für Betriebs- und Steuerparameter für die Brennkraftmaschine zu der Motorsteuersoftware vorgesehen.

Es wird dann nicht die Schwankung der unkorrigierten Differenzdruckwerte in dem Zeitintervall, sondern die Schwankung wenigstens eines Betriebs- und Steuerparameters überprüft. Insbesondere können beispielsweise die der Brennkraftmaschine zugeführte Luft- und Kraftstoffmenge als Betriebs- und Steuerparameter überprüft werden, wozu für jeden der Parameter ein Teilkriterium, wiederum das Unterschreiten vorgegebener Grenzwerte durch die Schwankungsbreite vorgesehen ist und stabile Betriebsbedingungen nur festgestellt werden, wenn beide Teilkriterien erfüllt sind. Die Teilkriterien entsprechen dem Kriterium des ersten Ausführungsbeispiels, wobei allerdings die Grenzwerte anders gewählt sind.

Eine weitere bevorzugte Ausführungsform der Erfindung unterscheidet sich von dem ersten Ausführungsbeispiel durch die Ermittlung des globalen minimalen Differenzdruckwertes. Dieser wird als der Mittelwert der niedrigsten fünf der für die stabilen Betriebsbedingungen repräsentativen unkorrigierten Differenzdruckwerte für alle Zeitintervalle mit stabilen Betriebsbedingungen ermittelt. Damit können statistische Fehler bei der Ermittlung reduziert werden, was in vorteilhafter Weise eine genauere Prüfung auch bei geringer Last zulässt.

**Patentansprüche**

1. Verfahren zur Erkennung eines fehlerhaften Anschlusses eines Differenzdrucksensors (4) mit einem Hoch- und einem Niederdruckanschluss (5, 6) an einen Abgastrakt (2) einer Brennkraftmaschine (1) parallel zu einem Partikelfilter (3) in dem Abgastrakt (2), bei dem

während des Betriebs der Brennkraftmaschine (1) geprüft wird, ob gemäß wenigstens einem vorgegebenen Kriterium stabile Betriebsbedingungen herrschen, und wenigstens bei Vorliegen stabiler Betriebsbedingungen aus Sensorsignalen des Differenzdrucksensors (4) wenigstens ein für die stabilen Betriebsbedingungen repräsentativer unkorrigierter Differenzdruckwert ermittelt wird, und

bei dem bei einer ersten Erkennung während des Betriebs der Brennkraftmaschine (1) geprüft wird, ob der für die stabilen Betriebsbedingungen repräsentative unkorrigierte Differenzdruck ein erstes vorgegebenes Fehlerkriterium für einen falschen Anschluss erfüllt, und/oder bei dem bei einer zweiten Erkennung nach Ende des Betriebs der Brennkraftmaschine (1) ein Wert eines Offsetparameters einer Kennlinie des Differenzdrucksensors (4) ermittelt, in Abhängigkeit von dem ermittelten Offsetparameterwert und dem für die stabilen Betriebsbedingungen repräsentativen unkorrigierten Differenzdruckwert ein korrigierter minimaler Differenzdruckwert ermittelt und geprüft wird, ob der korrigierte minimale Differenzdruckwert ein zweites vorgegebenes Fehlerkriterium für einen falschen Anschluss erfüllt.

2. Verfahren nach Anspruch 1, wobei während des Betriebs der Brennkraftmaschine (1) in mehreren aufeinanderfolgenden Zeitintervallen jeweils die Prüfung auf das Vorliegen stabiler Betriebsbedingungen und wenigstens bei Vorliegen der stabilen Betriebsbedingungen die Ermittlung des für die stabilen Betriebsbedingungen repräsentativen unkorrigierten Differenzdrucks für das jeweilige Zeitintervall durchgeführt werden.

3. Verfahren nach Anspruch 2, wobei bei der ersten Erkennung für jedes der Zeitintervalle mit stabilen Betriebsbedingungen die erste Fehlerprüfung durchgeführt wird, und bei dem bei einer Fehlerbestätigungsprüfung ein drittes Fehlerkriterium, ob ein Fehler gemäß dem ersten Fehlerkriterium in wenigstens zwei Zeitintervallen mit stabilen Betriebsbedingungen festgestellt wurde, geprüft wird.

4. Verfahren nach Anspruch 1, wobei bei der zweiten Erkennung zur Ermittlung des korrigierten minimalen Differenzdruckwertes die für die stabilen Betriebsbedingungen repräsentativen unkorrigierten Differenzdruckwerte für die Zeitintervalle mit stabilen Betriebsbedingungen verwendet werden.

5. Verfahren nach Anspruch 1, wobei in Abhängigkeit von dem Ergebnis wenigstens einer der Fehlerprüfungen oder der Fehlerbestätigungsprüfung ein Fehlersignal ausgegeben wird.

**6.** Verfahren nach Anspruch, wobei dem zur Prüfung des Vorliegens stabiler Betriebsbedingungen als Kriterium geprüft wird, ob die Schwankung der erfassten unkorrigierten Differenzdruckwerte gemäß einem vorgegebenen Konstanzkriterium hinreichend klein ist.

**7.** Verfahren nach Anspruch, wobei dem zur Prüfung des Vorliegens stabiler Betriebsbedingungen wenigstens ein Wert wenigstens eines Parameters oder einer Größe, die den Betriebszustand der Brennkraftmaschine (1) oder anderer Einrichtungen im Abgastrakt (2) vor dem Partikelfilter (3) wenigstens teilweise wiedergeben, erfasst und der Wert bei der Prüfung des Kriteriums verwendet.

**8.** Vorrichtung zur Erkennung eines fehlerhaften Anschlusses eines Differenzdrucksensors (4) mit einem Hoch- und einem Niederdruckanschluss (5, 6) an einem Abgastrakt (2) einer Brennkraftmaschine (1) parallel zu einem Partikelfilter (3) in dem Abgastrakt (2), umfassend
eine Sensorschnittstelle (8) zur Erfassung von Sensorsignalen des Differenzdrucksensors (4), die unkorrigierte Werte des an dem Differenzdrucksensor (4) anliegenden Differenzdrucks darstellen, und
eine mit der Sensorschnittstelle (8) verbundene Erkennungseinrichtung (12), die die Sensorsignale empfängt und auf der Basis der Sensorsignale das Verfahren nach einem der Ansprüche 1 bis 7 ausführt und insbesondere während des Betriebs der Brennkraftmaschine (1) prüft, ob gemäß wenigstens einem vorgegebenen Kriterium stabile Betriebsbedingungen in dem Abgastrakt (2) herrschen, und wenigstens bei Vorliegen stabiler Betriebsbedingungen wenigstens einen für die stabilen Betriebsbedingungen repräsentativer unkorrigierter Differenzdruckwert ermittelt, und bei einer ersten Erkennung während des Betriebs der Brennkraftmaschine prüft, ob der für die stabilen Betriebsbedingungen repräsentative unkorrigierte Differenzdruck ein erstes vorgegebenes Fehlerkriterium für einen falschen Anschluss erfüllt, und/oder bei einer zweiten Erkennung nach Ende des Betriebs der Brennkraftmaschine ein Wert eines Offsetparameters einer Kennlinie des Differenzdrucksensors (4) ermittelt, in Abhängigkeit von dem ermittelten Offsetparameterwert und dem für die stabilen Betriebsbedingungen repräsentativen unkorrigierten Differenzdruckwert ein korrigierter minimale Differenzdruckwert ermittelt und prüft, ob der korrigierte minimale Differenzdruckwert ein zweites vorgegebenes Fehlerkriterium für einen falschen Anschluss erfüllt.

**9.** Vorrichtung nach Anspruch 8, wobei die Erkennungseinrichtung (12) einen Speicher (10), in dem bei der ersten und der zweiten Fehlerprüfung verwendete Daten und Instruktionen eines Computerprogramms gespeichert sind, und einen Prozessor (11) umfasst, der bei Ausführung der Instruktionen das Verfahren nach einem der Ansprüche 1 bis 7 ausführt.

**10.** Vorrichtung nach Anspruch 8 oder 9, wobei die Erkennungseinrichtung (12) so ausgebildet ist, dass während des Betriebs in mehreren aufeinander folgenden Zeitintervallen jeweils die Prüfung auf das Vorliegen stabiler Betriebsbedingungen und wenigstens bei Vorliegen der stabilen Betriebsbedingungen die Ermittlung des für die stabilen Betriebsbedingungen repräsentativen unkorrigierten Differenzdruckwertes für das jeweilige Zeitintervall durchgeführt werden.

**11.** Vorrichtung nach Anspruch 10, bei der die Erkennungseinrichtung (12) so ausgebildet ist, dass bei Prüfung auf das Vorliegen von stabilen Betriebsbedingungen und Erfassung von unkorrigierten Differenzdruckwerten in mehreren Zeitintervallen bei der ersten Erkennung für jedes der Zeitintervalle mit stabilen Betriebsbedingungen die erste Fehlerprüfung durchgeführt wird, und dass bei einer Fehlerbestätigungsprüfung ein drittes Fehlerkriterium, ob ein Fehler gemäß dem ersten Fehlerkriterium in wenigstens zwei Zeitintervallen mit stabilen Betriebsbedingungen festgestellt wurde, geprüft wird.

**12.** Vorrichtung nach Anspruch 10 oder 11, bei der die Erkennungseinrichtung (12) so ausgebildet ist, bei der zweiten Erkennung zur Ermittlung des korrigierten minimalen Differenzdrucks die für die stabilen Betriebsbedingungen repräsentativen unkorrigierten Differenzdrücke für die Zeitintervalle mit stabilen Betriebsbedingungen verwendet werden.

**13.** Vorrichtung nach einem der Ansprüche 8 bis 12, bei der die Erkennungseinrichtung (12) so ausgebildet ist, dass zur Prüfung des Vorliegens stabiler Betriebsbedingungen als Kriterium geprüft, ob die Schwankung der erfassten unkorrigierten Differenzdruckwerte gemäß einem vorgegebenen Konstanzkriterium hinreichend klein ist.

**14.** Vorrichtung nach einem der Ansprüche 8 bis 13, die eine Schnittstelle (9) zu einer Motorsteuerung (7) der Brennkraftmaschine (1) aufweist, und bei der die Erkennungseinrichtung (12) über die Schnittstelle (9) Signale der Motorsteuerung (7) erfasst, die wenigstens einen Wert wenigstens eines Parameters oder einer Größe, die den Betriebszustand der Brennkraftmaschine (1) oder anderer Einrichtungen im Abgastrakt (2) vor dem Partikelfilter (3) wenigstens teilweise wiedergeben, repräsentieren, und zur Prüfung des Vorliegens stabiler Betriebsbedingungen den wenigstens einen Wert verwendet.

15. Computerprogramm zur Erkennung eines fehlerhaften Anschlusses eines Differenzdrucksensors (4) mit einem Hoch- und einem Niederdruckanschluss (5, 6) an einem Abgastrakt (2) einer Brennkraftmaschine (1) parallel zu einem Partikelfilter (3) in dem Abgastrakt (2), das Instruktionen umfasst, bei deren Ausführung eine Datenverarbeitungseinrichtung mit einer Sensorschnittstelle (8) zur Erfassung von Sensorsignalen, die unkorrigierte, an dem Differenzdrucksensor anliegende Differenzdruckwerte wiedergeben, auf Sensorsignale des Differenzdrucksensors (4) hin ein Verfahren nach einem der Ansprüche 1 bis 7 ausführt.

16. Computerlesbarer Datenträger, auf dem ein Computerprogramm nach Anspruch 15 gespeichert ist.

## FIG 1

## FIG 2

## FIG 3

FIG 4

Start

S10 — Während des Betriebszyklus:
Erkennung von stabilen Betriebsbedingungen und Erfassung von
unkorrigierten Differenzdruckwerten

S12 — Während des Betriebszyklus:
Erkennung eines Anschlußfehlers
auf der Basis erfaßter unkorrigierter
Differenzdrücke

S14 — Nach dem Ende des Betriebszyklus:
- Ermittlung eines aktuellen Offsetparameters,
- Erkennung eines Anschlußfehlers in
  Abhängigkeit von ermittelten
  extremalen unkorrigierter Differenzdrücken und dem aktuellen
  Offsetparameterwert

S16 — Speicherung des aktuellen
Offsetparameters

Ende